# EUROPÄISCHE PATENTSCHRIFT

(11) **EP 2 163 504 B1**
(45) Veröffentlichungstag und Bekanntmachung des Hinweises auf die Patenterteilung: **07.03.2012**
(21) Anmeldenummer: 09011189.9
(22) Anmeldetag: 01.09.2009
(51) Int. Cl.: B66C 23/18, F03D 1/00

(54) **Verfahren zum Hochheben von Komponenten von Windenenergieanlagen**
Method for lifting components of wind energy assemblies
Procédé de levage de composants d'éoliennes

(30) Priorität: 15.09.2008 DE 102008047341
(43) Veröffentlichungstag der Anmeldung: 17.03.2010
(73) Patentinhaber: Daubner & Stommel GbR Bau-Werk-Planung, 27777 Ganderkesee (DE)
(72) Erfinder: Stommel, Matthias, 27777 Ganderkesee (DE)
(74) Vertreter: Aulich, Martin

(56) Entgegenhaltungen:
- WO-A1-02/34664
- WO-A1-03/100249
- DE-A1- 10 028 513
- DE-A1-102004 056 340
- JP-A- 2000 204 792

## Beschreibung

Die vorliegende Erfindung betrifft ein Verfahren zum Hochheben von Komponenten einer Windenergieanlage auf Montagehöhe, wie z.B. aus DE 102004056340 A bekannt.

Es ist bekannt, dass die Abmessungen moderner Windenergieanlagen immer größer werden. Teilweise werden Windenergieanlagen errichtet mit Nabenhöhen von weit über hundert Metern. Aus diesen Abmessungen ergeben sich verschiedene Schwierigkeiten.

Ein besonderes Problem besteht darin, die einzelnen Komponenten der Windenergieanlage, etwa den Generator, bei der Installation der Anlage auf die benötigte Montagehöhe zu heben. Zu diesem Zweck ist es bekannt, Schwerlastkräne bzw. Großkräne einzusetzen, deren Ausleger eine beträchtliche Länge aufweisen und die für erhebliche Kräfte ausgelegt sind. Die Kosten, die für den Einsatz derartiger Kräne entstehen, sind immens.

Weiter ist es bekannt, im Bereich des Turmkopfes der Windenergieanlage, insbesondere am Maschinenträger, eine Hebeeinrichtung zu installieren. Diese verfügt in der Regel über eine Winde, auf die ein Zugseil aufgewickelt wird. Dieses Zugseil wird im Bedarfsfalle bis in Bodennähe herabgelassen. Dort werden hochzuhebende Komponenten mit dem Seil verbunden und anschließend durch Aufwicklung des Seils auf die Winde emporgehoben.

Die maximale Hubhöhe dieser Hebeeinrichtungen ist in der Regel allerdings nicht ausreichend, um Großkomponenten, die an oder auf dem Maschinenträger der Windenergieanlage positioniert werden müssen, wie etwa den Anlagengenerator, auf die benötigte Montagehöhe zu heben. Denn begrenzt bzw. definiert wird die Hubhöhe einer derartigen Hebeeinrichtung in der Regel durch Umlenkrollen, über die das jeweilige Zugseil nach unten herabgelassen wird. Diese Umlenkrollen sind üblicherweise am Maschinenträger befestigt. Da die obersten Bereiche der hochzuhebenden Komponente bestenfalls bis unmittelbar unterhalb der Umlenkrolle gehoben werden können, gelingt es nicht, die Komponente oder wenigstens Teilbereiche derselben in Montagehöhen oberhalb des Maschinenträgers zu heben. Ein Ringgenerator muss beispielsweise im Rahmen der Anlageninstallation mit einem an dem Maschinenträger montierten Achszapfen verbunden werden. Zu diesem Zweck wird der Ringgenerator zunächst zentrisch auf den Achszapfen aufgeschoben. Um dieses Aufschieben auf den Achszapfen zu ermöglichen, muss der Ringgenerator in entsprechender Montagehöhe zunächst zentrisch in Axialrichtung vor den Achszapfen gehoben werden. Dabei müssen die oberen Bereiche des Ringgenerators entsprechend auf eine Höhe oberhalb des Achszapfens und damit oberhalb des Maschinenträgers bewegt werden. Dies ist mit der beschriebenen Hebeeinrichtung nicht durchführbar.

Um die Hubhöhe der beschriebenen, am Maschinenträger angeordneten Hebeeinrichtungen zu verbessern, werden im Stand der Technik vereinzelt am Maschinenträger aufwendige Kraneinrichtungen installiert, die über nach schräg oben gerichtete Kranausleger verfügen. An Hubhöhe wird dabei gerade die Höhe zwischen dem freien Ende des Kranauslegers einerseits und dem Maschinenträger andererseits hinzugewonnen. Problematisch bei einem derartigen, schräg nach oben gerichteten Kranausleger ist allerdings, dass dieser während des Hebens von Großkomponenten erhebliche Lasten tragen bzw. Kräfte aushalten muss. Dies wiederum erfordert Installationen, deren Kosten die Kosten eines am Boden angeordneten, mobilen Schwerlast- bzw. Großkranes sogar noch übersteigen.

Ausgehend von diesem Stand der Technik ist es Aufgabe der vorliegenden Erfindung, ein Verfahren zum Hochheben von Komponenten einer Windenergieanlage anzugeben, mit dem insbesondere Großkomponenten auf möglichst effektive und kostensparende Weise auf die benötigte Montagehöhe emporgehoben werden können.

Diese Aufgabe wird gelöst durch ein Verfahren mit den Merkmalen des Anspruches 1.

Danach umfasst das Verfahren folgende Maßnahmen:
- Zum einen wird ein Zugmittel einer ersten Zugeinrichtung ausgehend von einem bodennah angeordneten Zugmittelantrieb entlang eines im Bereich des Turmkopfes der Windenergieanlage, insbesondere der Gondel, angeordneten, der ersten Zugeinrichtung zugeordneten Umlenkmittels zu der am Boden oder bodennah angeordneten Komponente geführt und an dieser befestigt, insbesondere im Bereich des Schwerpunkts der Komponente bzw. schwerpunktnah.
- Ein Zugmittel einer zweiten Zügeinrichtung wird ausgehend von einem Zugmittelantrieb dieser zweiten Zugeinrichtung entlang eines oberhalb des Umlenkmittels der ersten Zugeinrichtung angeordneten freien Endes eines Kranauslegers nach unten zu der Komponente geführt und dort relativ zu dem Schwerpunkt der Komponente weiter außen befestigt als das Zugmittel der ersten Zugeinrichtung, vorzugsweise in einem im montierten Zustand der Komponente oberen Bereich der Komponente, besonders bevorzugt im höchsten Punkt bzw. Bereich der Komponente.
- Die Komponente wird anschließend mit Hilfe der beiden Zugmittel der Zugeinrichtungen auf die benötigte Montagehöhe hochgezogen.

Demnach werden erfindungsgemäß mindestens zwei Zugeinrichtungen verwendet. Die (maximale) Hubhöhe der zweiten Zugeinrichtung ist dabei größer als die (maximale) Hubhöhe der ersten Zugeinrichtung.

In der bevorzugten Ausführungsform der Erfindung trägt die erste Hubeinrichtung die Hauptlast der hochzuhebenden Komponente. Die zweite Zugeinrichtung kann dabei zum einen zur Führung der Komponente während des Hebevorgangs dienen, insbesondere um Turmkollisionen zu vermeiden. Durch die Befestigung des Zugmittels der zweiten Zugeinrichtung weiter außen bzw. schwerpunktentfemter als das Zugmittel der ersten Zugeinrichtung wird allerdings zum anderen erreicht, dass die Komponente spätestens auf Montagehöhe durch die zweite Zugeinrichtung bzw. das zweite Zugmittel unter Ausnutzung von deren größerer Hubhöhe in eine Montagestellung verschwenkt werden kann.

Dabei wird auch während des Schwenkvorgangs die Hauptlast weiterhin von der ersten Zugeinrichtung getragen, da die zweite Zugeinrichtung im Wesentlichen (nur) ein Drehmoment auf die Komponente übertragen muss. Mit dem erfindungsgemäßen Verfahren wird daher erreicht, diejenige Last vergleichsweise gering zu halten, die der Kranausleger der zweiten Zugeinrichtung tragen muss.

Die Komponente wird bevorzugt mindestens einen Teil der Hebebewegung in einer Transportstellung empor gehoben, in der an beiden Zugmitteln mit gleicher oder annähernd gleicher Zuggeschwindigkeit gezogen wird. Später wird die Komponente von der Transportstellung in die Montagestellung rotiert oder verschwenkt. Dies kann dadurch erreicht werden, dass die zweite Zugeinrichtung mit höherer Zuggeschwindigkeit an der Komponente zieht als die erste Zugeinrichtung.

In der Regel wird das Verschwenken bzw. Rotieren der Komponente in die Montagestellung erst dann vorgenommen werden, wenn die Komponente bereits mindestens annähernd die benötigte Montagehöhe erreicht hat. Dann wird die Zugmittelgeschwindigkeit der ersten Zugeinrichtung bevorzugt auf null reduziert, während das Zugmittel der zweiten Zugeinrichtung weiter an der Komponente zieht. Entsprechend wird die Komponente dann verschwenkt. Wenn beispielsweise das Zugmittel der zweiten Zugeinrichtung unmittelbar an einem äußeren Rand der Komponente befestigt ist, kann dieses Zugmittel solange auf eine entsprechende Winde aufgewickelt und infolgedessen die Komponente verschwenkt werden, bis dieser äußere Rand entsprechend nach oben zeigt.

Alternativ zu dem obigen Vorgehen ist es natürlich grundsätzlich auch denkbar, dass während des gesamten oder eines längeren Zeitabschnitts der Hebebewegung die Zugmittelgeschwindigkeit der ersten Zugeinrichtung einerseits und die Zugmittelgeschwindigkeit der zweiten Zugeinrichtung andererseits so aufeinander abgestimmt sind, dass die Komponente mehr oder minder fließend von einer Transportstellung in die Montagestellung überführt wird. In diesem Fall muss die Zugmittelgeschwindigkeit der die Komponente führenden zweiten Zugeinrichtung entsprechend während dieses Zeitabschnitts etwas größer sein als die Zugmittelgeschwindigkeit der ersten Zugeinrichtung.

Vorteilhafterweise ist der Kranausleger der zweiten Zugeinrichtung Teil eines mobilen, bodennah bzw. am Boden angeordneten Krans, der temporär für die Hebevorgänge eingesetzt wird. Da der Kranausleger dann nur einen (geringen) Teil des Gewichts der Komponente heben muss, kann auf den Einsatz der besonders kostenintensiven, auf das Gesamtgewicht der Komponente ausgelegten Großkräne verzichtet werden.

Auch falls der Kranausleger alternativ ummittelbar als Teil der Windenenergieanlage im oberen Bereich derselben installiert wird, in der Regel am Maschinenträger, müssen die entsprechenden Installationen vorteilhafterweise nur auf das vergleichsweise geringe Teilgewicht der Komponente ausgelegt sein.

In weiterer Ausbildung der Erfindung ist der Zugmittelantrieb der ersten Zugeinrichtung eine Winde. Diese Winde wird in aller Regel an einem Fahrzeug angeordnet sein, etwa einem Windenfahrzeug oder einem Kranfahrzeug, dessen Ausleger im Rahmen des erfindungsgemäßen Hebeverfahrens eingefahren bleibt. Alternativ ist aber auch denkbar, die Winde am Fuß der Windenergieanlage fest zu installieren.

Mit Hilfe des Zugmittels der zweiten Zugeinrichtung kann verhindert werden, dass die Komponente während des Hebevorgangs mit dem üblicherweise konischen Turm der Windenergieanlage kollidiert. Die zweite Zugeinrichtung übernimmt bei dem Hebevorgang in diesem Fall (auch) eine Führungsfunktion.

Das Kollisionsrisiko kann allerdings noch weiter verringert werden. Zu diesem Zweck wird gemäß einem weiteren Aspekt der Erfindung ein seil- oder kettenartiges Führungsmittel unter Spannung ausgehend von dem oberen Bereich der Windenergieanlage, in dem es befestigt wird, wenigstens annähernd bis zum Boden geführt und dort verankert. Entlang des seil- oder kettenartigen Führungsmittels wird die hochzuhebende Komponente dann während des Hebevorgangs geführt. Dies kann dadurch geschehen, dass die Komponente mittels mit dieser fest verbundenen oder verbindbaren Führungselementen, wie etwa Ösen, Haken oder dergleichen, entlang des seil- oder kettenartigen Führungsmittels geführt wird.

Alternativ oder zusätzlich kann vorgesehen sein, an der anzuhebenden Komponente einen vorzugsweise elastischen Abstandshalter zu befestigen, der während des Hebevorgangs bei einer Kollision oder auch während des gesamten Hebevorgangs an dem Turm anliegt und Kollisionsbewegungen dämpft. Weiterhin ist denkbar, an dem Turm von unten nach oben ein schienenartiges Bauteil zu befestigen, in das Führungselemente eingreifen, nämlich Gegenstücke, die mit der hochzuhebenden Komponente verbunden werden. Die Schiene dient in diesem Fall als Führungsschiene, so dass während des Hebevorgangs unerwünschte Pendelbewegungen der Komponente oder dergleichen ausgeschlossen sind.

Weitere Merkmale der Erfindung ergeben sich aus den beigefügten Unteransprüchen, aus der nachfolgenden Beschreibung bevorzugter Ausführungsbeispiele der Erfindung sowie aus den beigefügten Zeichnungen. Darin zeigen:
- Fig. 1: eine erste Ausführungsform des erfindungsgemäßen Verfahrens zu drei verschiedenen Zeitpunkten als Prinzipskizzen,
- Fig. 2: eine weitere Ausführungsform des erfindungsgemäßen Verfahrens als Prinzipskizzen,
- Fig. 3: eine weitere Ausführungsform des erfindungsgemäßen Verfahrens als Prinzipskizzen, und
- Fig. 4: eine weitere Ausführungsform des erfindungsgemäßen Verfahrens als Prinzipskizzen.

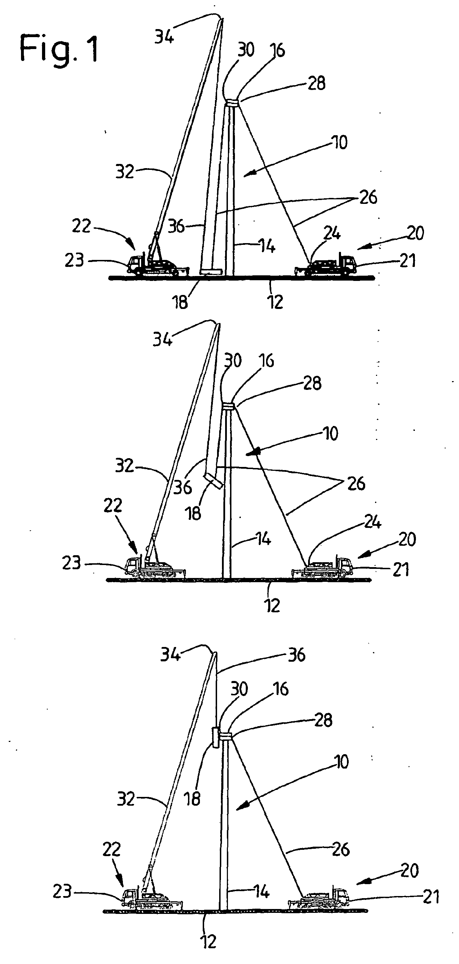

In den drei Zeichnungen der Fig. 1 ist jeweils eine im Aufbau befindliche, im Stand der Technik an sich bekannte, sogenannte getriebelose Windenergieanlage 10 dargestellt. Sie verfügt über einen auf einem horizontalen Untergrund 12 angeordneten Turm 14. Auf dem Turmkopf ist bereits eine übliche Gondel 16 bzw. das Maschinenhaus 16 der Windenergie 10 installiert. Nach Fertigstellung der Windenergieanlage 10 wird diese über einen Rotor mit drei Rotorblätter verfügen, der windgetrieben einen Generator zur Erzeugung von elektrischer Energie antreibt.

Zu den in den Zeichnungen dargestellten Installationszeitpunkten müssen noch verschiedene Großkomponenten der Anlage installiert werden. Schematisch dargestellt ist vorliegend die Installation eines Ringgenerators 18.

Der Ringgenerator 18 befindet sich zum in der oberen Zeichnung der Fig. 1 gezeigten Zeitpunkt noch am Fuß des Turmes 14. Er muss im Laufe der Montage - wie im Stand der Technik bekannt - mit einem innerhalb der Gondel 16 angeordneten Achszapfen verbunden werden bzw. auf diesen aufgeschoben werden. Zu diesem Zweck ist es zunächst notwendig, den Ringgenerator 18 auf die benötigte Montagehöhe zu heben.

In der oberen Zeichnung der Fig. 1 liegt der Ringgenerator 18 flach auf dem Boden auf, wobei dessen Mittelachse senkrecht nach oben zeigt. Um den Ringgenerator 18 auf die benötigte Montagehöhe anzuheben, sind erfindungsgemäß zwei Zugeinrichtungen 20, 22 im Einsatz:

Die erste Zugeinrichtung 20 weist ein auf der einen Seite des Turmes angeordnetes Windenfahrzeug 21 mit Winde 24 auf. Das Windenfahrzeug 21 ist dabei an der der Gondelrückseite zugewandten Seite angeordnet, d.h. an der von dem später installierten Rotor abgewandten Seite. Ausgehend von der Winde 24 verläuft ein seil- oder kettenartiges Zugmittel 26, in diesem Fall ein Zugseil, zu der Gondel 16.

Innerhalb der Gondel 16, nämlich an einem nicht dargestellten Maschinenträger, sind zwei Umlenkrollen 28, 30 der Zugeinrichtung 20 angeordnet, über die das Zugseil 26 umgelenkt wird. Die Umlenkrolle 28 ist dabei am hinteren Ende der Gondel 16 positioniert, die Umlenkrolle 30 am vorderen Ende der Gondel 16. Beide Umlenkrollen 28, 30 sind unmittelbar am Maschinenträger befestigt.

Das Seil 26 wird mit anderen Worten ausgehend vom hinteren Gondelende entlang der Umlenkrolle 28 zum vorderen Teil der Gondel 16 geführt. Dort wird das Zugseil 26 entlang der Umlenkrolle 30 aus der Gondel 16 herausgeführt, und zwar nach unten, und zu dem am Boden angeordneten Ringgenerator 18 geführt. Dort wird das Zugseil 26 schließlich mit geeigneten Befestigungsmitteln am Schwerpunkt des Ringgenerators 18 oder knapp unterhalb des Schwerpunktes befestigt.

Die zweite Zugeinrichtung 22 umfasst ein Kranfahrzeug 23, das bezogen auf den Turm 14 an der im Vergleich zu dem Windenfahrzeug 21 entgegengesetzten Turmseite positioniert ist. Das Kranfahrzeug 23 ist daher an der der Gondelvorderseite zugewandten Seite des Turmes 14 angeordnet.

Das Kranfahrzeug 23 verfügt über einen ausfahrbaren Ausleger 32, der in den Zeichnungen der Fig. 1 bereits soweit nach schräg oben in Richtung der Turmkopfoberseite bzw. der Gondel 16 ausgefahren ist, dass sich dessen freies Ende 34 einige Meter oberhalb der Umlenkrolle 30 der ersten Zugeinrichtung 20 befindet.

Mittels einer nicht explizit dargestellten Winde des Krans 23 wird ein Zugmittel 36, nämlich ebenfalls ein Zugseil, entlang des freien Endes 34 des Auslegers 32 nach unten zu dem Ringgenerator 18 geführt. Im Bereich des freien Endes 34 des Auslegers 32 ist zu diesem Zweck eine nicht dargestellte Umlenkrolle angeordnet, über die das Zugseil nach unten geführt wird.

Insgesamt ergibt sich aus dieser Anordnung automatisch eine größere maximale Hubhöhe der zweiten Zugeinrichtung 22 im Vergleich zu der ersten Zugeinrichtung 20. Denn die maximale Hubhöhe der ersten Zugeinrichtung wird bestimmt durch die Höhe, in der die vordere Umlenkrolle 30 an dem Maschinenträger befestigt ist, die maximale Hubhöhe der zweiten Zugeinrichtung dagegen durch die Höhe des freien Endes des Kranauslegers 32.

Das Zugseil 36 wird schließlich ebenfalls am Ringgenerator 18 befestigt. Die Befestigung des Zugseils 36 am Ringgenerator 18 erfolgt dabei relativ zu dem Schwerpunkt des Ringgenerators 18 weiter außen als die Befestigung des Zugseils 26. Bezogen auf den späteren montierten Zustand des Ringgenerators 18 wird das Zugseil 36 am nach oben zeigenden Rand desselben befestigt.

Um den Ringgenerator 18 hochzuheben, werden im Ausführungsbeispiel der Fig. 1 beide Zugmittelantriebe der Zugeinrichtungen 20, 22 möglichst zeitgleich in Betrieb gesetzt, so dass die Zugseile 26, 36 auf die entsprechenden Winden aufgewickelt werden. Durch die erfindungsgemäße Befestigung des Zugseils 26 schwerpunktnah bzw. unmittelbar unter dem Schwerpunkt einerseits und die Befestigung des Zugseils 36 weiter außen andererseits wird erreicht, dass die Hauptlast während des Hebevorgangs von der ersten Zugeinrichtung 20 getragen wird (mittlere Zeichnung der Fig. 1). Die zweite Zugeinrichtung 22 bzw. das Kranfahrzeug 23 muss während des Hebevorgangs nur einen vergleichsweise geringen Gewichtsanteil des Ringgenerators 18 heben. Entsprechend muss das Kranfahrzeug 23 nicht derart ausgelegt sein, dass er das Gesamtgewicht des Ringgenerators 18 tragen kann.

Die mittlere Zeichnung der Fig. 1 zeigt den Anhebevorgang zu einem gegenüber der oberen Zeichnung späteren Zeitpunkt. Die Komponente 18 ist bereits bis zur halben Höhe des Turms 14 angehoben worden. Der Ringgenerator 18 befindet sich in einer gegenüber der Horizontalen leicht geneigten Stellung. Dies wurde erreicht, indem das Zugseil 36 zu Beginn des Hebevorgangs mit leicht größerer Geschwindigkeit nach oben gezogen wurde als das Zugseil 26. In dieser leicht schräg ausgerichteten Transportstellung wird der Ringgenerator 18 empor gezogen, bis annähernd Montagehöhe erreicht ist.

Wenn die Montagehöhe annähernd erreicht ist wird der Ringkörper 18 verschwenkt, so dass dessen Mittelachse koaxial zum Achszapfen ausgerichtet ist (vgl. untere Zeichnung der Fig. 1). Das Verschwenken in die Montagestellung wird dadurch bewerkstelligt, dass das Zugseil 36 bei stillgesetztem, d.h. ruhendem Zugseil 26 weiter emporgezogen wird. Das Zugseil 36 bewirkt daher eine Rotation des Ringkörpers 18 in eine aufrechte, zum Aufschieben auf den Achszapfen geeignete Stellung.

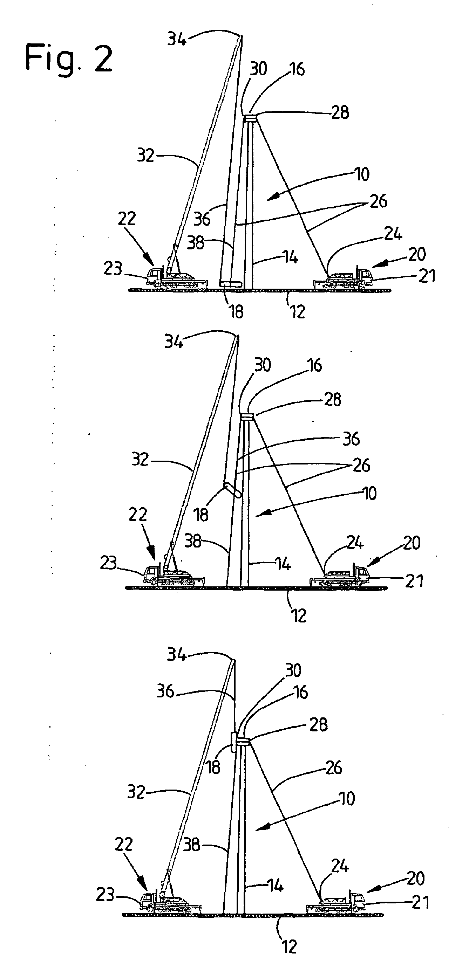

In weiterer Ausbildung der Erfindung ist zusätzlich ein Führungsseil 38 vorgesehen, das von der Vorderseite der Gondel 16 unter Spannung bis zum Boden 12 geführt ist. Das Seil ist einerseits am Maschinenträger befestigt, andererseits im Boden 12 verankert. Das Führungsseil 38 verläuft parallel zu dem Zugseil 26, vgl. Fig. 2. In den Zeichnungen der Fig. 2 ist daher nur das vordere Führungsseil 38 zu erkennen, das dahinter angeordnete Zugseil 26 ist durch Ersteres verdeckt. Das Führungsseil 38 hat die Funktion, den Ringkörper 18 während des Hebevorgangs durch die beiden Zugseile 26, 36 so zu führen, dass keine Kollision des Ringkörpers 18 mit dem Turm 14 erfolgt. Zu diesem Zweck weist der Ringkörper 18 Ösen oder andere Führungselemente auf, die mit dem Führungsteil 38 geeignet zusammenwirken. In einfachster Ausführung weist der Ringkörper 18 eine oder mehrere geeignete Ösen auf, durch die das Führungsseil 38 hindurchgeführt ist.

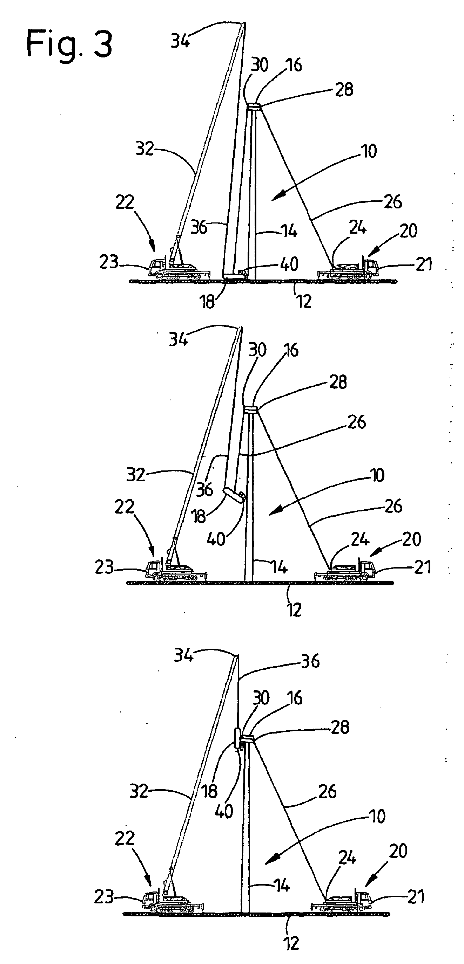

Um Kollisionen mit dem Turm 14 zu vermeiden, sind auch andere Maßnahmen denkbar. In den Zeichnungen der Fig. 3 ist ein elastischer Abstandshalter 40 gezeigt, der während des Hebevorgangs zwischen dem Ringkörper 18 und dem Turm 14 angeordnet ist. Der Abstandshalter 40 dämpft Bewegungen des Ringkörpers 18 in Richtung des Turmes 14. Der Abstandshalter 40 kann an dem Ringkörper 18 temporär befestigt werden. Alternativ oder zusätzlich ist denkbar, den Abstandshalter 40 mittels einer gleitenden Verbindung mit dem Turm 14 zu verbinden. Beispielsweise kann der Abstandshalter 40 mit geeigneten Mitteln versehen werden, die in eine von unten nach oben verlaufende Schiene an dem Turm 12 eingreifen. Hier sind verschiedene Ausführungsformen denkbar.

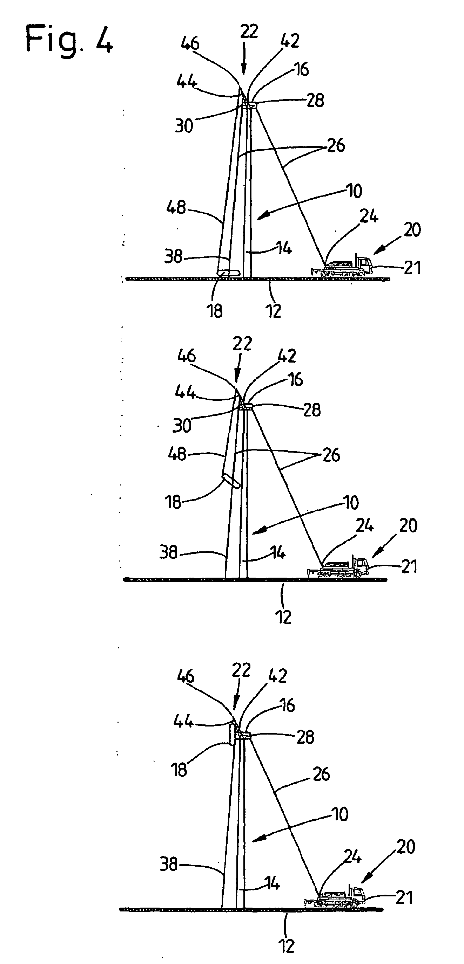

Fig. 4 zeigt schließlich eine Ausführungsform, bei der im Vergleich zu der Ausführungsform der Fig. 1 und 2 auf das mobile Kranfahrzeug 23 verzichtet wurde. Die zweite Zugeinrichtung 22 umfasst bei dieser Ausführungsform einen Kran 42, der im Bereich des Turmkopfes der Windenergieanlage 10 am Maschinenträger befestigt ist. Der Kran 42 verfügt über einen nach schräg oben in Richtung der Gondelvorderseite, also in Richtung des noch nicht installierten Rotors, gerichteten Ausleger 44. Das freie Ende 46 des Kranauslegers 44 ist ähnlich wie bei dem freien Ende 34 des Krans 23 gemäß den Ausführungsformen der Fig. 1 und 2 oberhalb der Umlenkrolle 30 der ersten Zugeinrichtung 20 angeordnet. Der Kran 42 verfügt über eine nicht dargestellte Winde, auf die ein entsprechendes Zugseil 48 aufgewickelt werden kann. Das Zugseil 48 verläuft in ähnlicher Weise wie das Zugseil 36 der Fig. 1 über das freie Ende 46 des Auslegers 44 bis zum bezogen auf den eingebauten Zustand des Ringkörpers 18 oberen Rand desselben' und ist dort befestigt. Analog zu der Ausführungsform der Fig. 1 wird auch hier der Ringkörper 18 durch beide Zugmitteleinrichtungen 20 bzw. 22 empor gezogen, wobei die Zugmitteleinrichtung 20 die Hauptlast trägt. Die Zugmitteleinrichtung 22 dagegen ist im Wesentlichen für die Rotation des Ringkörpers 18 in die endgültige Montagestellung verantwortlich.

### Bezugszeichenliste:

- 10: Windenergieanlage
- 12: Untergrund
- 14: Turm
- 16: Gondel
- 18: Ringgenerator
- 20: erste Zugeinrichtung
- 21: Windenfahrzeug
- 22: zweite Zugeinrichtung
- 23: Kranfahrzeug
- 24: Winde
- 26: Zugseil
- 28: Umlenkrolle
- 30: Umlenkrolle
- 32: Kranausleger
- 34: freies Ende
- 36: Zugseil
- 38: Führungsseil
- 40: Abstandshalter
- 42: Kran
- 44: Kranausleger
- 46: freies Ende
- 48: Zugseil

## Patentansprüche

1. Verfahren zum Hochheben von Komponenten einer Windenergieanlage (10) auf Montagehöhe mit folgenden Maßnahmen:
- ein Zugmittel (26) einer ersten Zugeinrichtung (20) wird ausgehend von einem bodennah angeordneten Zugmittelantrieb (24) entlang eines im Bereich des Turmkopfes der Windenergieanlage (10), insbesondere im Bereich der Gondel, angeordneten, der ersten Zugeinrichtung (20) zugeordneten Umlenkmittels (30) zu einer am Boden oder bodennah angeordneten Komponente (18) geführt und an dieser befestigt, insbesondere im Bereich des Komponentenschwerpunkts bzw. schwerpunktnah,
- ein Zugmittel (36, 48) einer zweiten Zugeinrichtung (22) wird ausgehend von einem Zugmittelantrieb dieser zweiten Zugeinrichtung (22) entlang eines oberhalb des Umlenkmittels (30) der ersten Zugeinrichtung (20) angeordneten freien Endes (34, 46) eines Kranauslegers (32, 44) nach unten zu der Komponente (18) geführt und dort relativ zu dem Schwerpunkt der Komponente weiter außen befestigt als das Zugmittel (26) der ersten Zugeinrichtung (20), vorzugsweise in einem im montierten Zustand der Komponente (18) oberen Bereich der Komponente (18),
- die Komponente (18) wird anschließend mit Hilfe der beiden Zugmittel (26, 36, 48) der Zugeinrichtungen (20, 22) auf die benötigte Montagehöhe hochgezogen.

2. Verfahren gemäß Anspruch 1, **dadurch gekennzeichnet, dass** die Komponente (18) mindestens einen Teil der Hebebewegung in einer Transportstellung emporgehoben wird, in der an beiden Zugmitteln (26, 36, 48) mit gleicher oder annähernd gleicher Zuggeschwindigkeit gezogen wird.

3. Verfahren gemäß Anspruch 1 oder 2, **dadurch gekennzeichnet, dass** die Komponente (18), bevorzugt in Montagehöhe, von einer Transportstellung in eine Montagestellung rotiert oder verschwenkt wird, vorzugsweise, indem die zweite Zugeinrichtung (22) mit höherer Zuggeschwindigkeit an der Komponente (18) zieht als die erste Zugeinrichtung (20).

4. Verfahren gemäß Anspruch 1, 2 oder 3, **dadurch gekennzeichnet, dass** das Zugmittel (26, 36, 48) der ersten und/oder zweiten Zugeinrichtung (20, 22), insbesondere ein Seil, eine Kette oder dergleichen, zum Hochheben der Komponente jeweils auf eine motorbetriebene (Seil-)Winde aufgewickelt wird.

5. Verfahren gemäß einem oder mehreren der vorhergehenden Ansprüche, **dadurch gekennzeichnet, dass** der Zugmittelantrieb (24) der ersten und/oder der zweiten Zugeinrichtung (20, 22) an einem Fahrzeug (21, 23) angeordnet ist.

6. Verfahren gemäß einem oder mehreren der vorhergehenden Ansprüche, **dadurch gekennzeichnet, dass** das Zugmittel (36, 48) der zweiten Zugeinrichtung (22) entlang des freien Endes (34, 46) des Kranauslegers (32, 44) eines mobilen Kranfahrzeugs (23) oder eines im oberen Bereich der Windenergieanlage (10), insbesondere am Maschinenträger, angeordneten Krans (42) nach unten zu der Komponente (18) geführt wird, vorzugsweise mittels eines an dem freien Ende (34, 46) angeordneten Umlenkmittels.

7. Verfahren gemäß einem oder mehreren der vorhergehenden Ansprüche, **dadurch gekennzeichnet, dass** ausgehend von dem oberen Bereich der Windenergieanlage (10), insbesondere der Gondel (16), bevorzugt dem Maschinenträger, ein seil- oder kettenartiges Führungsmittel (38) unter Spannung wenigstens annähernd bis zum Boden (12) geführt und dort verankert wird, entlang dessen die Komponente (18) während des Hebevorgangs geführt wird, um die Kollisionsgefahr mit dem Turm (14) der Windenenergieanlage (10) zu verringern, vorzugsweise indem das seil- oder kettenartige Führungsmittel-(38) mittels mit der Komponente (18) fest verbundenen oder verbindbaren Führungselementen wie etwa Ösen, Haken oder dergleichen geführt wird.

8. Verfahren gemäß einem oder mehreren der vorhergehenden Ansprüche, **dadurch gekennzeichnet, dass** zur Reduktion von während des Hebevorgangs durch Turmkollisionen hervorgerufenen Schäden an der anzuhebenden Komponente (18) ein lösbarer, mindestens teilweise elastischer Abstandshalter (40) befestigt wird, insbesondere mindestens an der beim Hebevorgang dem Turm (14) voraussichtlich zugewandten Komponentenseite.

## Claims

1. Method for lifting of components of a wind energy installation (10) to an installation height, having the following measures:
- a hoisting means (26) of a first hoisting device (20) is guided starting from a hoisting means drive (24), which is arranged close to the ground, along a deflection means (30), which is arranged in the area of the tower head of the wind energy installation (10), in particular in the area of the pod, and is associated with the first hoisting device (20), to a component (18) which is arranged on the ground or close to the ground, and is attached to said component (18), in particular in the area of the component centre of gravity or close to the centre of gravity,
- a hoisting means (36, 48) of a second hoisting device (22) is guided starting from a hoisting means drive of this second hoisting device (22) along a free end (34, 46), which is arranged above the deflection means (30) of the first hoisting device (20), of a crane jib (32, 44) downwards to the component (18), and is attached there further outwards relative to the centre of gravity of the component than the hoisting means (26) of the first hoisting device (20), preferably in an upper area of the component (18) when the component (18) is in the installed state,
- the component (18) is then lifted to the required installation height with the aid of the two hoisting means (26, 36, 48) of the hoisting devices (20, 22).

2. Method according to Claim 1, **characterized in that** the component (18) is lifted up for at least a part of the lifting movement in a transport position in which hoisting is carried out at the same or approximately the same hoisting speed on both hoisting means (26, 36, 48).

3. Method according to Claim 1 or 2, **characterized in that** the component (18) is rotated or pivoted from a transport position to an installation position, preferably at the installation height, preferably by the second hoisting device (22) hoisting the component (18) at a faster hoisting speed than the first hoisting device (20).

4. Method according to Claim 1, 2 or 3, **characterized in that** the hoisting means (26, 36, 48) of the first and/or second hoisting device (20, 22), in particular a cable, a chain or the like, is in each case wound onto a motor-driven (cable) winch in order to lift the component.

5. Method according to one or more of the preceding claims, **characterized in that** the hoisting means drive (24) of the first and/or of the second hoisting device (20, 22) is arranged on a vehicle (21, 23).

6. Method according to one or more of the preceding claims, **characterized in that** the hoisting means (36, 48) of the second hoisting device (22) is guided along the free end (34, 46) of the crane jib (32, 44) of a mobile crane vehicle (23) or of a crane (42), which is arranged in the upper area of the wind energy installation (10), in particular on the machine support, downwards to the component (18), preferably by means of a deflection means which is arranged at the free end (34, 46).

7. Method according to one or more of the preceding claims, **characterized in that**, starting from the upper area of the wind energy installation (10), in particular the pod (16), and preferably the machine support, a cable-like or chain-like guide means (38) is guided in a stressed manner at least approximately as far as the ground (12), and is anchored there, along which the component (18) is guided during the lifting process, in order to reduce the risk of collision with the tower (14) of the wind energy installation (10), preferably by the cable-like or chain-like guide means (38) being guided by means of the guide elements, which are or can be firmly connected to the component (18), such as eyes, hooks or the like.

8. Method according to one or more of the preceding claims, **characterized in that**, in order to reduce damage to the component (18) to be lifted, caused by tower collisions during the lifting process, a detachable, at least partially elastic spacer (40) is attached, in particular at least to the component side which is intended to face the tower (14) during the lifting process.

## Revendications

1. Procédé de levage de composants d'une éolienne (10) à une hauteur de montage, comprenant les mesures suivantes :
- un moyen de traction (26) d'un premier dispositif de traction (20) est guidé à partir d'un entraînement de moyen de traction (24) disposé à proximité du sol le long d'un moyen de déflexion (30) disposé dans la région de la tête de tour de l'éolienne (10), notamment dans la région de la nacelle, et associé au premier dispositif de traction (20), jusqu'à un composant (18) disposé au sol ou à proximité du sol, et est fixé à celui-ci, en particulier dans la région du centre de gravité du composant, ou à proximité de celui-ci,
- un moyen de traction (36, 48) d'un deuxième dispositif de traction (22) est guidé à partir d'un entraînement de moyen de traction de ce deuxième dispositif de traction (22) le long d'une extrémité libre (34, 46) d'une flèche de grue (32, 44) disposée au-dessus du moyen de déflexion (30) du premier dispositif de traction (20), vers le bas jusqu'au composant (18), et y est fixé par rapport au centre de gravité du composant plus à l'extérieur que le moyen de traction (26) du premier dispositif de traction (20), de préférence dans une région du composant (18) supérieure dans l'état monté du composant (18),
- le composant (18) est ensuite tiré vers le haut à l'aide des deux moyens de traction (26 ; 36, 48) des dispositifs de traction (20, 22) à la hauteur de montage nécessaire.

2. Procédé selon la revendication 1, **caractérisé en ce que** le composant (18) est soulevé sur au moins une partie du mouvement de levage dans une position de transport dans laquelle on tire sur les deux moyens de traction (26, 36, 48) avec une vitesse de traction identique ou approximativement identique.

3. Procédé selon la revendication 1 ou 2, **caractérisé en ce que** le composant (18), de préférence à la hauteur de montage, est tourné ou pivoté d'une position de transport dans une position de montage de préférence par le fait que le deuxième dispositif de traction (22) tire avec une vitesse de traction supérieure sur le composant (18) que le premier dispositif de traction (20).

4. Procédé selon la revendication 1, 2 ou 3, **caractérisé en ce que** le moyen de traction (26, 36, 48) du premier et/ou du deuxième dispositif de traction (20, 22) , en particulier un câble, une chaîne ou similaire, est enroulé à chaque fois sur un treuil (à câble) entraîné par un moteur, pour soulever le composant.

5. Procédé selon l'une quelconque ou plusieurs des revendications précédentes, **caractérisé en ce que** l'entraînement de moyen de traction (24) du premier et/ou du deuxième dispositif de traction (20, 22) est disposé sur un véhicule (21, 23).

6. Procédé selon l'une quelconque ou plusieurs des revendications précédentes, **caractérise en ce que** le moyen de traction (36, 48) du deuxième dispositif de traction (22) est guidé le long de l'extrémité libre (34, 46) de la flèche de grue (32, 44) d'une grue mobile (23) ou d'une grue (42) disposée dans la région supérieure de l'éolienne (10), notamment sur le support de machine, vers le bas jusqu'au composant (18), de préférence à l'aide d'un moyen de déflexion disposé sur l'extrémité libre (34, 46).

7. Procédé selon l'une quelconque ou plusieurs des revendications précédentes, **caractérisé en ce qu'**à partir de la région supérieure de l'éolienne (10), notamment de la nacelle (16), de préférence du support de machine, un moyen de guidage (38) de type câble ou chaîne est guidé sous tension au moins approximativement jusqu'au sol (12) et y est ancré, le long duquel le composant (18) est guidé pendant l'opération de levage, afin de réduire le risque de collision avec la tour (14) de l'éolienne (10), de préférence par le fait que le moyen de guidage (38) de type câble ou chaîne est guidé au moyen d'éléments de guidage connectés ou pouvant être connectés fixement au composant (18), comme par exemple des oeillets, des crochets ou similaires.

8. Procédé selon l'une quelconque ou plusieurs des revendications précédentes, **caractérisé en ce que** pour la réduction de dommages provoqués pendant l'opération de levage par des collisions avec la tour, un dispositif d'espacement détachable, au moins partiellement élastique (40), est fixé sur le composant à lever (18), notamment au moins au niveau du côté du composant tourné probablement vers la tour (14) lors de l'opération de levage.
